# EUROPEAN PATENT APPLICATION

(11) **EP 3 032 668 A1**
(43) Date of publication of application: **15.06.2016**
(21) Application number: 14834557.2
(22) Date of filing: 18.07.2014
(51) Int. Cl.: H02G 3/30, B60R 16/02, F16B 2/08

(54) **ATTACHMENT STRUCTURE FOR BINDING BAND**

(30) Priority: 07.08.2013 JP 2013163992
(71) Applicant: Sumitomo Wiring Systems, Ltd., Yokkaichi-shi, Mie 510-8503 (JP)
(72) Inventor: IWATA, Makoto, Yokkaichi-shi Mie 510-8503 (JP)
(74) Representative: Müller-Boré & Partner Patentanwälte PartG mbB
(86) International application number: PCT/JP2014/069180
(87) International publication number: WO 2015/019830

(57) **Abstract**

It is aimed to provide a novel attachment structure for binding band having a simple structure and capable of easily attaching a binding band to a wall portion of a holding body without requiring a large space. An attachment structure for binding band is for binding and fixing a held body 12 to a supporting wall portion 24 of a holding body 10 by a binding band 14 and includes a recess 22 open on the supporting wall portion 24 of the holding body 10 and a side wall portion 26 intersecting with the supporting wall portion 24 and a locking projection 32 cantilevered toward a side wall portion opening 28 of the recess 22 from a bottom surface 30 facing the side wall portion opening 28. The binding band 14 is tightened together with the held body 12 in a state where a band main body 36 of the binding band 14 arranged in a ring-like manner around the held body 12 is inserted into the recess 22 through the side wall portion opening 28 and locked to the locking projection 32.

## Description

### Technical Field

The present invention relates to an attachment structure for binding band for binding and fixing a held body to a holding body by a binding band.

### Background Art

Conventionally, in attaching a held body such as a wiring harness to be routed in an automotive vehicle to a holding body such as an electrical connection box or a bracket, an attachment structure for binding and fixing the held body to a supporting wall portion of the holding body by a binding band has been widely adopted. Such an attachment structure for binding band is, for example, known from Japanese Unexamined Patent Publication No. 2008-232222 (patent literature 1). Specifically, two insertion holes are provided on a supporting wall portion of an electrical connection box as a holding body, a binding band is locked to the supporting wall portion of the holding body and the binding band is tightened together with a wiring harness as a held body by pulling out a tip part of the binding band inserted into one hole from the other hole, whereby the wiring harness is fixedly attached to the electrical connection box by the binding band.

However, an operation of pulling out the tip part of the binding band inserted into one of the two insertion holes provided on the supporting wall portion of the holding body from the other had problems of requiring the tip part of the binding band to be curved in a desired direction, being very cumbersome and taking time.

Contrary to this, in FIG. 5 of patent literature 1 and Japanese Unexamined Patent Publication No. 2013-21828 (patent literature 2), operability is improved by providing a guide wall for guiding a tip part of a binding band toward another insertion hole inside one insertion hole provided on a supporting wall portion of a holding body and reliably guiding the tip part of the binding band toward the other insertion hole.

However, it has caused problems of complicating the structure of the holding body and increasing production cost to provide such a guide wall on a back side of the supporting wall portion of the holding body. Further, to curve the rigid binding band, it is necessary to ensure a relatively long separation distance between the two insertion holes as in patent literature 1 and ensure a long length of a curved guiding surface of the guide wall as in patent literature 2. Thus, in either case, the enlargement of the attachment structure is unavoidable. If a large space cannot be secured in the holding body, the guide wall cannot be provided and, hence, there has been still room for improvement.

### Citation List

### Patent Literature

Patent literature 1:
   Japanese Unexamined Patent Publication No. 2008-232222
Patent literature 2:
   Japanese Unexamined Patent Publication No. 2013-21828

### Summary of the Invention

### Technical Problem

The present invention was developed against the above situation and aims to provide a novel attachment structure for binding band having a simple structure and capable of easily attaching a binding band to a supporting wall portion of a holding body without requiring a large space.

### Solution to Problem

A first aspect of the present invention is directed to an attachment structure for binding band for binding and fixing a held body to a supporting wall portion of a holding body by a binding band, the attachment structure including a recess open on the supporting wall portion of the holding body and a side wall portion intersecting with the supporting wall portion, and a locking projection cantilevered toward a side wall portion opening of the recess from a bottom surface facing the side wall portion opening, wherein the binding band is tightened together with the held body in a state where a band main body of the binding band arranged in a ring-like manner around the held body is inserted into the recess through the side wall portion opening and locked to the locking projection.

According to this aspect, a locking portion of the binding band to the holding body can be formed by a simple structure of providing the recess open on the supporting wall portion and the side wall portion of the holding body and providing the locking projection in such a recess. Thus, it is possible to simplify the structure, improve productivity and reduce cost as compared with a structure of providing a guide wall in the supporting wall portion of the holding body like a conventional structure.

Further, since the locking projection to which the binding band is locked is exposed to outside through the opening of the recess, the visibility of the locking projection is ensured and access is facilitated. Thus, the binding band can be reliably and quickly locked to the locking projection and attachment operability can be improved as compared with the case where the binding band is inserted into two insertion holes provided on the supporting wall portion of the holding body in a state where visual confirmation is not possible as in the conventional structure.

In addition, since the locking projection to which the binding band is locked is provided to project in the recess open on the supporting wall portion and the side wall portion, the band main body curved in advance to have an opening width of the recess can be inserted through the side wall portion opening and locked to the locking projection with the binding band arranged in a ring-like manner around the held body. Thus, it is not necessary to ensure a large space for curving the binding band and it is possible to provide the attachment structure for binding band also in a narrow area. By binding the binding band locked to the locking projection in this way together with the held body, the held body is easily fixedly attached to the holding body with good operability and space efficiency by the binding band.

According to a second aspect of the present invention, in the attachment structure according to the first aspect, a retaining protrusion is provided on a projecting tip part of the locking projection.

According to this aspect, since the retaining protrusion is provided on the projecting end part of the locking projection, the disengagement of the binding band from the locking projection is prevented by the interference of the binding band with the retaining protrusion even if the binding band is displaced to a tip side of the locking projection due to vehicle vibration or the like. Thus, the separation of the held body from the holding body is prevented.

According to a third aspect of the present invention, in the attachment structure according to the first or second aspect, the side wall portion includes a first side wall portion and a second side wall portion extending in directions different from each other, and the recess is open on both the first and second side wall portions.

According to this aspect, since the recess is open on both the first and second side wall portions extending in two directions different from each other, the visibility and accessibility of the locking projection are further improved and an operation of locking the binding band to the locking projection can be more quickly and reliably performed.

### Effects of the Invention

According to the present invention, the locking portion of the binding band to the holding body can be formed by the simple structure of providing the recess open on the supporting wall portion and the side wall portion of the holding body and providing the locking projection in such a recess. Thus, it is possible to simplify the structure, improve productivity and reduce cost as compared with a structure of providing a guide wall like the conventional structure. Further, since the locking projection to which the binding band is locked is exposed to outside through the opening of the recess, the visibility of the locking projection is ensured and access is facilitated. In addition, the band main body can be inserted through the side wall portion opening and locked to the locking projection with the binding band arranged in a ring-like manner around the held body. Thus, the attachment structure for binding band can be provided also in a narrow area.

### Brief Description of the Drawings

FIG. 1 is a perspective view showing an electrical connection box to which an attachment structure for binding band as one embodiment of the present invention is applied,
FIG. 2 is an enlarged perspective view before a binding band shown in FIG. 1 is bound,
FIGS. 3 are enlarged views showing a locking projection shown in FIG. 1 viewed from predetermined positions ((a) view in a direction of an arrow A and (b) view in a direction of an arrow B), and
FIGS. 4 are views, corresponding to FIGS. 3, showing an electrical connection box as another embodiment of the present invention viewed from predetermined positions ((a) view in the direction of the arrow A and (b) view in the direction of the arrow B).

### Embodiments of the Invention

Hereinafter, embodiments of the present invention are described with reference to the drawings.

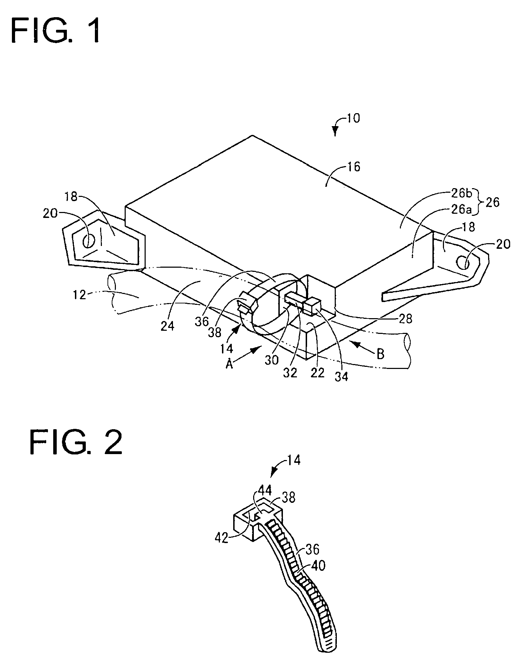

FIGS. 1 to 3 show a structure for binding and fixing a wiring harness 12 as a held body to a later-described supporting wall portion 24 of an electrical connection box 10 as a holding body by a binding band 14 using an attachment structure for binding band as one embodiment of the present invention. As shown in FIG. 1, the electrical connection box 10 is so configured that unillustrated various electrical components, busbars, connectors, etc. are arranged in a case 16 having a substantially block shape. Attachment leg portions 18 are formed to extend outward from two positions on the outer surface of this case 16 and fixed to a vehicle or the like by mounting unillustrated fixing bolts into bolt insertion holes 20 penetrating through the attachment leg portions 18. Here, the case 16 and the attachment leg portions 18 are integrally formed of synthetic resin such as polypropylene (PP) or polyamide (PA) by injection molding or the like.

As shown in FIG. 1, one corner of the case 16 of the electrical connection box 10 is cut into a substantially block shape, thereby forming a recess 22. Specifically, the recess 22 is formed to be open on a supporting wall portion 24 against which the wiring harness 12 is pressed to be supported and a side wall portion 26 intersecting with the supporting wall portion 24. Here, the side wall portion 26 is composed of a first side wall portion 26a and a second side wall portion 26b extending in directions different from each other. In short, the recess 22 is open on both the first and second side wall portions 26a and 26b in addition to the supporting wall portion 24.

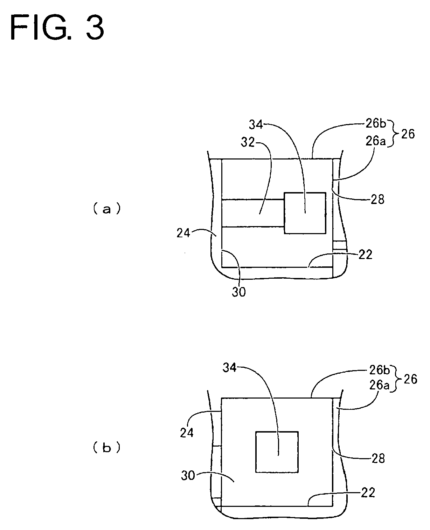

Further, as shown in FIGS. 1 and 3, a substantially column-shaped locking projection 32 cantilevered from a central part of a bottom surface 30 facing a side wall portion opening of the recess 22, e.g. an opening 28 of the first side wall portion 26a toward the opening 28 is provided in the recess 22. Further, a retaining protrusion 34 is provided on a projecting tip part of the locking projection 32, which is formed into a block shape wider than a base end part. Note that the locking projection 32 is so formed that the projecting tip part is located near the opening 28 of the first side wall portion 26a and does not project outwardly beyond the first side wall portion 26a.

The wiring harness 12 is bound and fixed to the electrical connection box 10 structured as described above using the binding band 14 in accordance with the attachment structure for binding band of this embodiment. More specifically, as shown in FIG. 2, the binding band 14 includes a band main body 36 in the form of a long and narrow flat plate having a rectangular cross-section, and an inserting/locking portion 38 is integrally formed on one end part of this band main body 36 in a length direction. As known, the binding band 14 is integrally molded of a synthetic resin material and the band main body 36 can be curved and deformed. Further, a multitude of sawtooth-like projections 40 are formed side by side in a longitudinal direction of the band main body 36 on one side of the band main body 36 in a thickness direction.

Further, the inserting/locking portion 38 of the binding band 14 is formed with an insertion hole 42 and a locking piece 44 projecting into this insertion hole 42. By curving the band main body 36 into a ring shape and inserting the tip part into the insertion hole 42, the locking piece 44 is locked to the projection 40 of the band main body 36.

Accordingly, the band main body 36 of the binding band 14 is inserted into the recess 22 through the opening 28 of the first side wall portion 26a after being arranged in a ring-like manner around the wiring harness 12. Subsequently, the binding band 14 is tightened with the band main body 36 of the binding band 14 locked to the base end part of the locking projection 32. In this way, the binding band 14 is tightened together with the wiring harness 12 and the wiring harness 12 as a held body is bound and fixed to the supporting wall portion 24 of the electrical connection box as a holding body by the binding band 14.

According to such an attachment structure for binding band according to this embodiment, the locking projection 32 as a locking portion of the binding band 14 to the electrical connection box 10 can be formed by a simple structure of providing the recess 22 open on the supporting wall portion 24 and the side wall portion 26 of the electrical connection box 10 and providing the locking projection 32 in the recess 22. Thus, as compared with a structure of providing a guide wall like a conventional structure, it is possible to simplify the structure, improve productivity and reduce cost.

In addition, since the locking projection 32 to which the binding band 14 is locked is exposed to outside through the opening of the recess 22, the visibility of the locking projection 32 is ensured and access is facilitated. Thus, the binding band 14 can be reliably and quickly locked to the locking projection 32 and attachment operability can be improved as compared with the case where the binding band is inserted into two insertion holes provided on the supporting wall portion of the holding body in a state where visual confirmation is not possible as in the conventional structure.

Further, since the retaining protrusion 34 is provided on the projecting tip part of the locking projection 32, the disengagement of the binding band 14 from the locking projection 32 is prevented by the interference of the binding band 14 with the retaining protrusion 34 even if the binding band 14 is displaced to the tip side of the locking projection 32 due to vehicle vibration or the like. Thus, the separation of the wiring harness 12 from the electrical connection box 10 is prevented.

In addition, since the locking projection 32 to which the binding band 14 is locked is provided to project in the recess 22 open on the supporting wall portion 24 and the side wall portion 26, the band main body 36 curved in advance to have an opening width of the recess 22 can be inserted through the opening 28 of the first side wall portion 26a and locked to the locking projection 32 with the binding band 14 arranged in a ring-like manner around the wiring harness 12. Thus, it is not necessary to ensure a large space for curving the binding band 14 and it is possible to provide the attachment structure for binding band also in a narrow area. By binding the binding band 14 locked to the locking projection 32 in this way together with the wiring harness 12, the wiring harness 12 is easily fixedly attached to the electrical connection box 10 with good operability and space efficiency by the binding band 14.

Further, since the recess 22 is opened on both the first and second side wall portions 26a, 26b extending in two different directions, the visibility and accessibility of the locking projection 32 are further improved and an operation of locking the binding band 14 to the locking projection 32 can be more quickly and reliably performed.

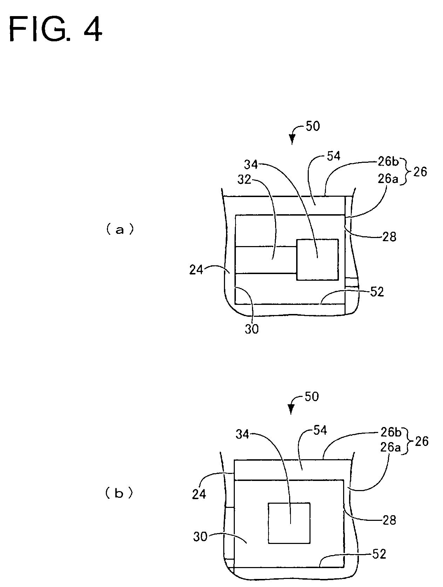

An electrical connection box 50 as another embodiment of the present invention is described in detail using FIGS. 4. Members and parts structured similarly to the above embodiment are not described in detail by being denoted by the same reference signs as in the above embodiment in FIGS. 4. Specifically, such an electrical connection box 50 of this embodiment differs from the above embodiment in that (i) an opening on a second side wall portion 26b is closed by an extending wall portion 54 extending from the second side wall portion 26b in a recess 52.

Also in the electrical connection box 50 as this embodiment, the attachment structure for binding band of the present invention can be advantageously applied as in the electrical connection box 10 of the above embodiment. More specifically, as shown in FIGS. 1 and 4, a band main body 36 of a binding band 14 is inserted into the recess 52 through an opening 28 of a first side wall portion 26a after being first arranged in a ring-like manner around a wiring harness 12. Subsequently, the binding band 14 is tightened with the band main body 36 of the binding band 14 locked to a base end part of a locking projection 32. In this way, the binding band 14 is tightened together with the wiring harness 12 and the wiring harness 12 as a held body is bound and fixed to a supporting wall portion 24 of the electrical connection box 50 as a holding body by the binding band 14.

Here, in this embodiment, the recess 52 is open only on a supporting wall portion 25 of the electrical connection box 50 and the first side wall portion 26a as one side wall portion intersecting with the supporting wall portion 24. Since this causes the recess 52 to be covered by the extending wall portion 54 of the second side wall portion 26b as another side wall portion, the interference of the band main body 36 and the like locked to the locking projection 32 with other members can be advantageously prevented.

Although the embodiments of the present invention have been described in detail above, the present invention is not limited to the specific description of the embodiments. For example, the attachment structure for binding band of the present invention is similarly applicable in any case provided that the attachment structure is for binding and fixing the held body to the holding body to which the binding band 14 is attached such as a wire holding bracket, a protector or a clip beside the electrical connection boxes 10, 50.

### LIST OF REFERENCE SIGNS

10, 50: electrical connection box (holding body), 12: wiring harness (held body), 14: binding band, 22, 52: recess, 24: supporting wall portion, 26: side wall portion, 26a: first side wall portion, 26b: second side wall portion, 28: opening (opening on side wall portion), 30: bottom surface, 32: locking projection, 34: retaining protrusion, 36: band main body

## Claims

1. An attachment structure for binding band for binding and fixing a held body to a supporting wall portion of a holding body by a binding band, comprising:
a recess open on the supporting wall portion of the holding body and a side wall portion intersecting with the supporting wall portion; and
a locking projection cantilevered toward a side wall portion opening of the recess from a bottom surface facing the side wall portion opening,
wherein the binding band is tightened together with the held body in a state where a band main body of the binding band arranged in a ring-like manner around the held body is inserted into the recess through the side wall portion opening and locked to the locking projection.

2. An attachment structure for binding band according to claim 1, wherein a retaining protrusion is provided on a projecting tip part of the locking projection.

3. An attachment structure for binding band according to claim 1 or 2, wherein the side wall portion includes a first side wall portion and a second side wall portion extending in directions different from each other, and the recess is open on both the first and second side wall portions.
